# EUROPÄISCHE PATENTSCHRIFT

(11) **EP 1 874 571 B1**
(45) Veröffentlichungstag und Bekanntmachung des Hinweises auf die Patenterteilung: **13.06.2012**
(21) Anmeldenummer: 06753398.4
(22) Anmeldetag: 21.04.2006
(51) Int. Cl.: B60G 17/017, B61F 5/14, B61F 5/22, B61D 47/00

(54) **VORRICHTUNG ZUR SEKUNDÄRFEDERUNG EINES WAGENKASTENS BEI EINEM SCHIENENFAHRZEUG**
DEVICE FOR THE SECONDARY SUSPENSION OF A BODY OF A RAIL VEHICLE
DISPOSITIF POUR SUSPENSION SECONDAIRE DE CAISSE DE VEHICULE FERROVIAIRE

(30) Priorität: 22.04.2005 DE 102005018945
(43) Veröffentlichungstag der Anmeldung: 09.01.2008
(73) Patentinhaber: KNORR-BREMSE Systeme für Schienenfahrzeuge GmbH, 80809 München (DE)
(72) Erfinder: LEHMAIR, Martin, 80935 München (DE); NIES, Eduard, 82178 Puchheim (DE); HOMMEN, Winfred, 85560 Ebersberg (DE); WALDSTEIN, Martin, 80804 München (DE); OBERTHÜR, Ralf, 81245 München (DE)
(74) Vertreter: Schönmann, Kurt
(86) Internationale Anmeldenummer: PCT/EP2006/003673
(87) Internationale Veröffentlichungsnummer: WO 2006/111398

(56) Entgegenhaltungen:
- DE-A1- 10 315 000
- US-A- 5 573 266
- US-A- 5 588 368

## Beschreibung

Die vorliegende Erfindung betrifft eine Vorrichtung zur Sekundärfederung eines Wagenkastens bei einem Schienenfahrzeug, mit einer zwischen dem Wagenkasten und einem Drehgestell angeordneten Stahlfeder als passives Federelement, welche während der Fahrt des Schienenfahrzeuges zumindest ein angehobenes Fahrtniveau für den Wagenkasten sicherstellt, wobei die Stahlfeder im Stillstand des Schienenfahrzeuges mittels eines Zugzylinders zusammendrückbar ist, um ein unterhalb des angehobenen Fahrtniveaus liegendes abgesenktes Bahnsteigniveau für den Wagenkasten einzustellen.

Eine Sekundärfederung zwischen einem Wagenkasten und einem spurgebundenen Drehgestell eines Schienenfahrzeuges kommt insbesondere zur zusätzlichen Schwingungsisolierung des Wagenkastens zum Einsatz, um im Personenverkehr eine komfortable Fahrt zu ermöglichen. In vielen Fällen wirkt die Sekundärfederung auch mit einer Wanksteuerung für den Wagenkasten zusammen. Neben der Sekundärfederung zur Komfortsteigerung weist ein Schienenfahrzeug der hier interessierenden Art auch eine Primärfederung auf. Die Primärfederung wirkt zwischen den Radachsen des Schienenfahrzeuges und dem Drehgestell und dient vornehmlich der Absorption harter Stöße, welchen das Schienenfahrzeug während der Fahrt aufgrund ungleichmäßiger Schienenführung und dergleichen ausgesetzt ist.

Aus der DE 103 15 000 A1 geht eine gattungsgemäße Vorrichtung zur Sekundärfederung hervor. Zur Sekundärfederung ist zwischen dem Drehgestell und dem Wagenkasten ein Federelement vorgesehen, welches eine aktive hydraulische Feder, Gasfeder oder dergleichen oder aber auch eine passive Feder in Form einer nach Art einer Druckfeder ausgebildeten Stahlfeder oder dergleichen sein kann. Zum Federelement ist zwischen dem Drehgestell und dem Wagenkasten ein Zugzylinder vorgesehen, mit welchem eine gegen die Kraft des Federelements wirkende Rückstellkraft erzeugbar ist, um den Wagenkasten aus dem angehobenen Fahrtniveau in ein abgesenktes Bahnsteigniveau (Lade-/Endladeposition) zu bringen und zu halten. Eine Deaktivierung des Zugzylinders bewirkt, dass der Wagenkasten von der Rückstellkraft der Federstufe wieder in das angehobene Fahrtniveau gelangt. Bei dem Zugzylinder handelt es sich hier um einen einseitig beaufschlagbaren Hydraulikzylinder. Damit die Zugwirkung eintritt, also die Kolbenstange bei Druckmittelbeaufschlagung in den Zylinderkörper des Zugzylinders eintaucht, erfolgt eine zylinderdeckelseitige Druckmittelbeaufschlagung des innenliegenden Kolbens.

Ein Nachteil der vorstehend beschriebenen bekannten Vorrichtung resultiert daraus, dass bei einer Aufprägung von Bewegungen durch die Fahrzeugdynamik im drucklosen Zustand des Zugzylinders die im Hydrauliköl gelöste Luft (in Folge des durch Abwärtsbewegung des Wagenkastens verursachten Unterdrucks in der Druckkammer des Zugzylinders) Schäden an Dichtungen - wie Dieseleffekt oder Karvitationseffekt - hervorrufen kann. Versuche haben ergeben, dass der durch die externen Kräfte entstehende Unterdruck im Druckraum des Zugzylinders Luft von außen her über einseitig wirkende dynamische Hydraulikdichtungen zieht, was sich im Laufe der Zeit nachteilig auf das gesamte Systemverhalten -insbesondere den Reaktionszeiten - des Zugzylinders auswirkt.

Die US 5,588,368 offenbart eine Vorrichtung zur Sekundärfederung eines Schienenfahrzeuges, bei welcher neben einem Federelement ein Zugzylinder zur Einstellung eines Bahnsteigniveaus angeordnet ist. Der Zugzylinder ist dabei als elektromechanisches Element ausgeführt. Ein kolbenstangenseitiges Durchstoßlager sorgt dafür, dass die Kolbenstange beim Einfedern des Wagenkastens nicht in den Zugzylinder eingedrückt wird.

Es ist daher die Aufgabe der vorliegenden Erfindung, eine Vorrichtung zur Sekundärfederung der vorstehend beschriebenen Art dahingehend weiterzuverbessern, dass der Verschleiß des den Zugzylinder beaufschlagenden hydraulischen Systems minimiert wird, so dass insbesondere die Reaktionszeiten klein bleiben.

Die Aufgabe wird von den Vorrichtungen gemäß den unabhängigen Ansprüchen gelöst. Die nachfolgenden abhängigen Ansprüche geben vorteilhafte Weiterbildungen der Erfindung wieder.

Die Erfindung schließt die technische Lehre ein, dass der Zugzylinder mit Mitteln zum mechanischen Entkoppeln der Abwärtsbewegung des Wagenkastens von einer Druckverringerung im Druckraum des Zugzylinders ausgestattet ist.

Der Vorteil der erfindungsgemäßen Lösung liegt insbesondere darin, dass hiermit ein Unterdruck im Zugzylinder aufgrund einer Abwärtsbewegung des Wagenkastens vermieden wird. Durch die erfindungsgemäße mechanische Entkopplung erfolgt eine Trennung der festen Verbindung zwischen Kolben und Kolbenstange. Dadurch wird erreicht, dass die durch den Wagenkasten der Kolbenstange aufgezwungene Bewegung nach unten zu keiner Verschiebung des Kolbens führt. Hierdurch wird im Druckraum des Zugzylinders kein Unterdruck erzeugt, so dass die eingangs geschilderten Unterdruckprobleme nicht mehr auftreten. Bei einer der Kolbenstange aufgezwungene Bewegung nach oben wird der Kolben durch die Kolbenstange jedoch nach oben geschleppt. Dabei entsteht lediglich durch Strömungswiderstände ein Überdruck, der nicht mit nennenswerten Nachteilen verbunden ist. Durch die erfindungsgemäße Lösung werden die Dichtungen des hydraulischen Systems auch von hochfrequenten dynamischen Bewegungen entkoppelt, was zu einem geringeren Verschleiß an den Dichtungen führt. Hieraus ergibt sich eine deutliche Standzeiterhöhung des Zugzylinders selbst sowie der Dichtungen des hiermit direkt in Verbindung stehenden hydraulischen Systems. Dies wirkt sich wiederum in einer Verlängerung der Intervalle zwischen zwei Überholungen von Zugzylindern durch den Betreiber des Schienenfahrzeugs aus.

Die erfindungsgemäßen Mitteln zum mechanischen Entkoppeln können vorzugsweise gemäß den nachstehend beschriebenen Ausführungsformen konstruktiv ausgebildet werden:

Zum einen ist es möglich, den Kolben des Zugzylinders mit einem zentralen Durchbruch für eine Bundkolbenstange zu versehen, so dass bei der Abwärtsbewegung der Bundkolbenstange der Kolben in der aktuellen Position verbleibt. Durch diese Trennung der als Bundkolbenstange ausgebildeten Kolbenstange und des Kolbens führen Abwärtsbewegungen - also eine Verringerung des Abstandes zwischen Wagenkasten und Drehgestell - lediglich dazu, dass die Kolbenstange in den Zugzylinder eintaucht. Der Kolben selbst wird nicht nach unten verschoben, so dass auch kein Unterdruck erzeugt wird. Aufwärtsbewegungen der Bundkolbenstange bewirken, dass diese aufgrund des endseitigen Bundes den Kolben mitnimmt. Bei der nächsten Abwärtsbewegung wird der Kolben wiederum nicht mit nach unten genommen.

Vorzugsweise ist der Durchbruch des Kolbens für die Bundkolbenstange mit mindestens einem Dichtring versehen, der dichtend an der Bundkolbenstange zur Anlage kommt. Durch diese Dichtungsmaßnahme wird vermieden, dass das im Druckraum vorhandene Druckmittel in den dem Kolben gegenüberliegenden entlüfteten Raum des Zugzylinders und eventuell anschließend in die Umwelt gelangt.

Gemäß einer anderen Ausführungsform bestehen die Mittel zum mechanischen Entkoppeln eine den Kolben mit Kolbenstange bildende und das Zylindergehäuse abgedichtet durchdringende topfförmige Kolbeneinheit. Die Kolbeneinheit besitzt bodenseitig einen Durchbruch für eine Bundkolbenstange, so dass - ähnlich wie bei der vorstehend beschriebenen Ausführungsform - bei der Abwärtsbewegung der Bundkolbenstange die Kolbeneinheit in der aktuellen Position bleibt. Bei dieser Ausführungsform sind Kolben und Kolbenstange fest miteinander verbunden und können beispielsweise einstückig ausgeführt sein. Der Durchbruch zum Hindurchführen der Bundkolbenstange bildet einen Bund seitens der Kolbeneinheit, welcher mit einem korrespondierenden Bund am distalen Ende der Bundkolbenstange nach Art eines Anschlags zusammenwirkt. Der Vorteil dieser Ausführungsform resultiert aus der Tatsache, dass die mechanische Entkoppelung hier nicht innerhalb des ölführenden Druckraums erfolgt, was entsprechende Leckagegefahren verhindert. Diese Ausführungsform kommt mit lediglich zwei dynamischen Dichtungen aus, nämlich einer Dichtung zwischen Kolben und Zylindergehäuse des Zugzylinders und einer anderen Dichtung zwischen dem Zylindergehäuse und der Bundkolbenstange im Bereich des Durchbruchs.

Gemäß einer nicht beanspruchten Ausführungsform wird vorgeschlagen, dass die Mittel zum mechanischen Entkoppeln nach Art eines Durchstoßlagers ausgeführt sind. Ein solches Durchstoßlager kann sowohl seitens des Wagenkastens als auch seitens des Drehgestells angeordnet sein. Konkret kann das Durchstoßlager derart aufgebaut sein, dass das distale Ende der Kolbenstange in einen Lagerkugelbereich ausläuft, der mit einer korrespondierenden in einem Durchbruch des Wagenkastens bzw. des Drehgestells für die Kolbenstange ausgebildeten Lagerpfanne zusammenwirkt. Durch das bei dieser Lösung erzeugte Eintauchen der Kolbenstange in den Bereich des Wagenkastens bzw. des Drehgestells verbleibt der starr mit der Kolbenstange gekoppelte Kolben trotzdem in der aktuellen Position und erzeugt nicht einen Unterdruck im Druckraum. Da bei dieser Ausführungsform die mechanische Entkopplung außerhalb des Zugzylinders angeordnet ist, ist ein herkömmlicher Zugzylinder vorteilhafterweise nur leicht zu modifizieren

Gemäß einer alternativen Ausführungsform weisen die Mitteln zum mechanischen Entkoppeln eine weitere Bundkolbenstange auf, die durch einen zylinderbodenseitigen Durchbruch des Zugzylinders in einem entlüfteten Innenraum desselben geführt ist, und zwar auf der dem Druckraum gegenüberliegenden Seite des Zugzylinders, so dass auch hierdurch bei der Abwärtsbewegung des Wagenkastens die Kolbenstange samt Kolben in der aktuellen Position bleibt. Auch bei dieser Ausführungsform sind Kolben und Kolbenstange fest miteinander verbunden, allerdings ist der Boden des Zylindergehäuses offen. Der die Öffnung darstellende Durchbruch ist derart gestaltet, dass ein umlaufender Bund entsteht. Die hiermit zusammenwirkende weitere Bundkolbenstange stellt zum einen die mechanische Entkopplung dar; zum anderen erfolgt hierüber die Anbindung des Zugzylinders am Drehgestell. Natürlich ist auch bei dieser Ausführungsform die kinematische Umkehr möglich.

Vorzugsweise ist der durch den Durchbruch geführte Kolbenstangendurchmesser der Bundkolbenstange mehr als halb so groß wie der Bunddurchmesser der Bundkolbenstange. Eine derartige Dimensionierung ergibt eine recht kräftige Bundkolbenstange, welche den beim erfindungsgemäßen Einsatz auftretenden Belastungen optimal zu wiederstehen vermag.

Gemäß einer letzten bevorzugten Ausführungsform der Erfindung wird vorgeschlagen, dass die Mittel zum mechanischen Entkoppeln einen Zylinderkopfkolben umfassen, der den Druckraum des Zugzylinders stirnseitig begrenzt und axial bis zu einem Zylinderbund abgedichtet relativ zum Zylindergehäuse bewegbar ist. Der Zylinderkopfkolben ist des Weiteren mit einem zentralen Durchbruch zur Hindurchführung der Kolbenstange der Kolbeneinheit versehen, so dass bei der Abwärtsbewegung die Kolbeneinheit in der aktuellen Position bleibt. Bei dieser technischen Lösung ist der Zylinderkopfkolben nicht fester Bestandteil des Zylindergehäuses des Zugzylinders, sondern hiervon bewegungsentkoppelt und mittels Bund am oberen Ende des Zylindergehäuses in seinem Hub begrenzt. Durch den axial relativ zum Zylindergehäuse bewegbaren Zylinderkopfkolben wird sichergestellt, dass beim Eintauchen der Kolbeneinheit in das Zylindergehäuse im Druckraum durch Strömungswiderstände kein Unterdruck entsteht, da der Zylinderkopfkolben an der Außenseite mit Atmosphärendruck beaufschlagt ist, so dass im Druckraum durch axiales Nachrutschen des Zylinderkopfkolbens stets Atmosphärendruck herrscht.

Der Zylinderkopfkolben weist vorzugsweise mindestens einen außenradialen Dichtring zur Abdichtung gegenüber dem Zylindergehäuse auf. Der Durchbruch des Zylinderkopfkolbens sollte ebenfalls mit mindestens einem Dichtring ausgestattet sein, um auch an dieser Stelle der Gefahr austretenden Hydrauliköls zu begegnen.

Weitere die Erfindung verbessernde Maßnahmen werden nachstehend gemeinsam mit der Beschreibung von bevorzugten Ausführungsformen der Erfindung näher dargestellt. Es zeigt:
- Fig. 1: eine schematische Darstellung einer ersten Ausführungsform von Mitteln zum mechanischen Entkoppeln bei einem Zugzylinder,
- Fig.2: eine schematische Darstellung einer zweiten Ausführungsform von Mitteln zum mechanischen Entkoppeln bei einem Zugzylinder,
- Fig.3: eine schematische Darstellung einer dritten Ausführungsform von Mitteln zum mechanischen Entkoppeln bei einem Zugzylinder, die jedoch nicht Teil der Erfindung ist,
- Fig.4: eine schematische Darstellung einer vierten Ausführungsform von Mitteln zum mechanischen Entkoppeln bei einem Zugzylinder
- Fig.5: eine schematische Darstellung einer fünften Ausführungsform von Mitteln zum mechanischen Entkoppeln bei einem Zugzylinder

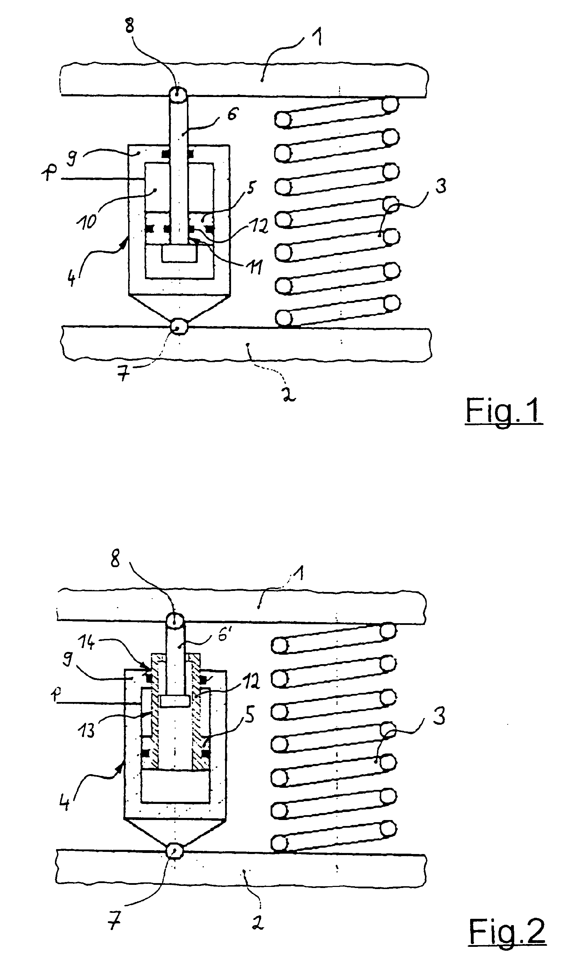

Gemäß Fig.1 ist zwischen einem oberen Wagenkasten 1 - eines nicht weiter dargestellten - Schienenfahrzeugs und einem unteren Drehgestell 2 ein Federelement 3 nach Art einer Stahlfeder angeordnet. Das Federelement 3 gewährleistet während der Fahrt des Schienenfahrzeugs ein angehobenes Fahrtniveau für den Wagenkasten 1, so dass dieser von fahrtbedingt störenden Schwingungen weitestgehend unbeeinflusst bleibt. Das Federelement 3 übernimmt gleichzeitig auch die Querfederung des Wagenkastens 1. Zum Federelement 3 ist ein Zugzylinder 4 parallel angeordnet. Der Zugzylinder 4 wirkt insoweit ebenfalls zwischen dem oberen Wagenkasten 1 und dem unteren Drehgestell 2 und ist hieran über ein unteres Schwenklager 7 bzw. oberes Schwenklager 8 angelenkt.

Der Zugzylinder 4 besteht im Wesentlichen aus einem Zylindergehäuse 9, in welchem ein Kolben 5 axial bewegbar untergebracht ist. Der Kolben 5 wird über eine Druckversorgungsleitung p, die mit einem im Zylindergehäuse 9 vorhandenen Druckraum 10 in Verbindung steht, mit Hydrauliköl beaufschlagt. Auf der dem Druckraum 10 gegenüberliegenden Seite des Kolbens 5 ist der Kolben unbelastet. Mit dem Kolben 5 steht eine Kolbenstange 6 in Verbindung, deren distales Ende am oberen Schwenklager 8 endet.

Der Zugzylinder 4 dient dem Zusammendrücken des benachbarten Federelements 3, so dass der Wagenkasten 1 von seinem normaler Weise angehobenen Fahrtniveau in ein abgesenktes Bahnsteigniveau überführbar ist. Auf diesem unteren Bahnsteigniveau kommen die - nicht weiter dargestellten - Türschwellen der Eingangstüren des Wagenkastens 1 in höhenmäßige Übereinstimmung mit dem - ebenfalls nicht dargestellten - Bahnsteig, so dass ein ungehindertes Ein- und Aussteigen möglich ist.

Der Zugzylinder 4 ist weiterhin mit Mitteln zum mechanischen Entkoppeln der Abwärtsbewegung des Wagenkastens 1 von einer Druckverringerung im Druckraum 10 des Zugzylinders 4 ausgestattet. Bei dieser Ausführungsform ist zu diesem Zwecke der Kolben 5 mit einem zentralen Durchbruch 11 versehen, durch welchen die Bundkolbenstange 6 geführt ist. Eine Abwärtsbewegung der Bundkolbenstange 6 bewirkt durch die mechanische Entkopplung, dass der Kolben 5 in der aktuellen Position verbleibt und kein Unterdruck im Druckraum 10 entsteht. Zur Abdichtung ist der Durchbruch 11 im Kolben 5 mit einem Dichtring 12 versehen, welche dichtend an der Bundkolbenstange 6 zur Anlage kommt. Gemäß Fig.2 umfassen die Mittel zum mechanischen Entkoppeln eine den Kolben 5 mit Kolbenstange 12 bildende und das Zylindergehäuse 9 abgedichtet durchdringende topfförmige Kolbeneinheit 13. Die Kolbeneinheit 13 weist bodenseitig einen Durchbruch 14 auf, durch welchen eine Bundkolbenstange 6' geführt ist. In Folge dessen bleibt bei einer Abwärtsbewegung der Bundkolbenstange 6' die Kolbeneinheit 13 und damit auch der Kolben 5 in der aktuellen Position.

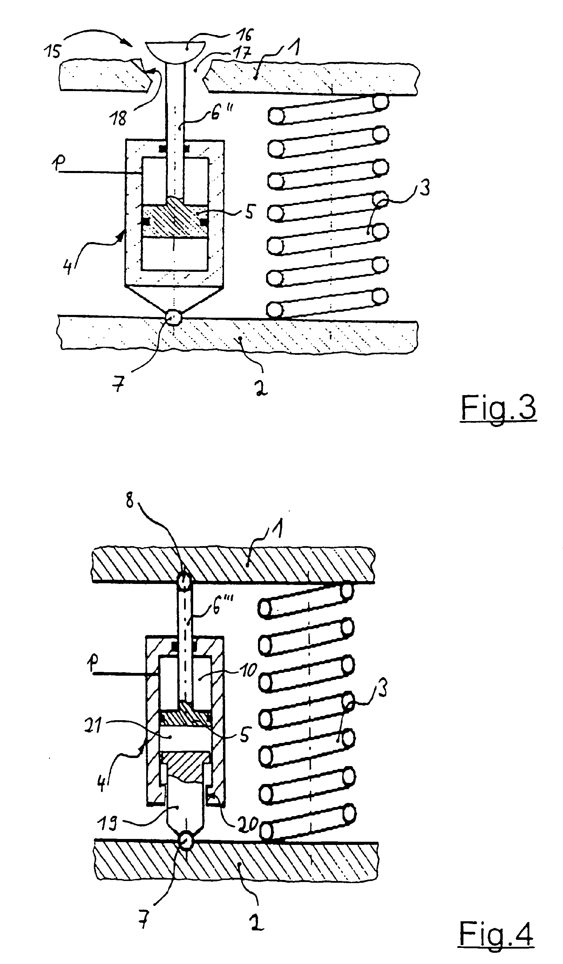

Nach Fig.3 ist Kernbestandteil einer anderen Ausführungsform der Mittel zum mechanischen Entkoppeln ein Durchstoßlager 15, das hier seitens des Wagenkastens 1 vorgesehen ist. Das distale Ende der Kolbenstange 6" läuft in einen Lagerkugelbereich 16 aus, der mit einer korrespondierenden in einem Durchbruch 17 in der Wandung des Wagenkastens 1 für die Kolbenstange 6" ausgebildeten Lagerpfanne 18 zusammenwirkt. Auch hier verbleibt bei einer Abwärtsbewegung des Wagenkastens 1 die Kolbenstange 6" samt Kolben 5 in der aktuellen Position. Das mit dem Lagerkugelbereich 16 ausgestattet Ende der Kolbenstange 6" taucht dagegen in das Innere des Wagenkastens 1 ein. Die mechanische Entkopplung findet hier also außerhalb des Zugzylinders 4 statt. Diese Ausführungsform ist nicht Teil der Erfindung und wird nicht weiter beansprucht.

Gemäß Fig.4 sind bei diesem Zugzylinder 4 die Mittel zum mechanischen Entkoppeln zylinderbodenseitig angeordnet. Diese umfassen eine Bundkolbenstange 19, die durch einen zylinderbodenseitigen Durchbruch 20 in einen dem Kolben 5 gegenüber dem Druckraum 10 begrenzenden entlüfteten Innenraum 21 ragt. Die durch den Durchbruch 20 geführte stabile Bundkolbenstange 19 weist einen Durchmesser auf, der abzüglich der Bundbreite dem Durchmesser des Innenraums 21 entspricht. Eine Abwärtsbewegung des Wagenkastens 1 führt auch hier dazu, dass die Kolbenstange 6'" samt Kolben 5, welcher den Druckraum 10 begrenzt, in der aktuellen Position bleibt. Denn stattdessen führt die koaxiale Bundkolbenstange 19 eine ungehinderte Einfahrbewegung in Reaktion auf die besagte Belastung aus.

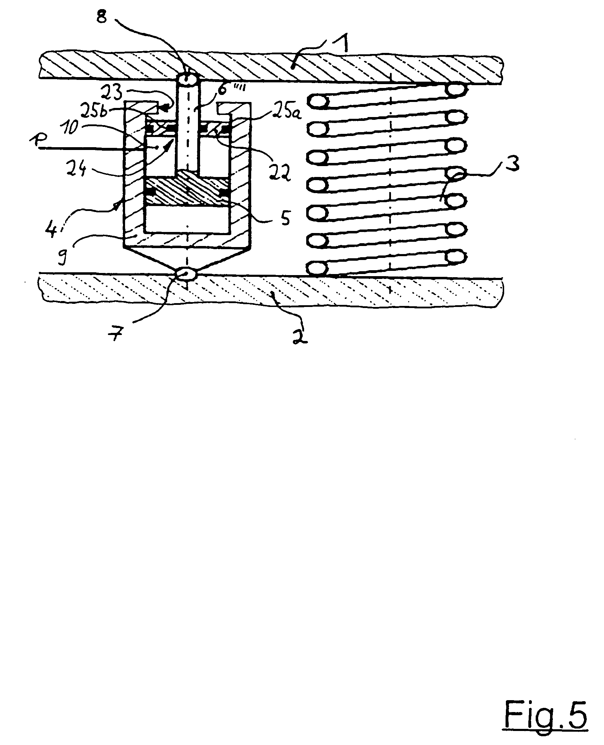

Nach Fig. 5 ist ein Zylinderkopfkolben 22 Hauptbestandteil der Mittel zum mechanischen Entkoppeln bei diesem Zugzylinder 4. Der Zylinderkopfkolben 22 begrenzt den Druckraum 10 stirnseitig. Das Zylindergehäuse 9 weist zylinderkopfseitig einen nach innen gerichteten Zylinderbund 23 auf, welcher als oberer Anschlag für den Zylinderkolben 22 dient. Der Zylinderkopfkolben 22 ist mit einem zentralen Durchbruch 24 versehen, durch welchen die Kolbenstange 6"" - welche hier eine Einheit mit dem Kolben 5 bildet - abgedichtet hindurchgeführt ist. Zu Abdichtungszwecken ist der spezielle Zylinderkopfkolben 22 mit einer außenradialen Dichtung 25a sowie einer im Durchbruch 24 angeordneten innenradialen Dichtring 25b versehen. Der Zylinderkopfkolben 22 ist hier also nicht fester Bestandteil des Zylindergehäuses 9, sondern axial hierzu bewegbar, so dass bei einer Abwärtsbewegung der Kolbenstange 6"" der Zylinderkopfkolben 22 mitverschobenen wird, wodurch Unterdruck im Druckraum 10 vermieden wird.

Die Erfindung ist nicht beschränkt auf die vorstehend aufgeführten bevorzugten Ausführungsformen. Vielmehr sind auch weitere Ausführungsformen denkbar, welche vom Schutzbereich der nachfolgenden Ansprüche umfasst sind.

### Bezugszeichenliste

- **1**: Wagenkasten
- **2**: Drehgestell
- **3**: Federelement
- **4**: Zugzylinder
- **5**: Kolben
- **6**: Kolbenstange
- **7**: unteres Schwenklager
- **8**: oberes Schwenklager
- **9**: Zylindergehäuse
- **10**: Druckraum
- **11**: Durchbruch
- **12**: Kolbenstange
- **13**: Kolbeneinheit
- **14**: Durchbruch
- **15**: Durchstoßlager
- **16**: Lagerkugelbereich
- **17**: Durchbruch
- **18**: Lagerpfanne
- **19**: Bundkolbenstange
- **20**: Durchbruch
- **21**: Innenraum
- **22**: Zylinderkopfkolben
- **23**: Zylinderbund
- **24**: Durchbruch
- **25**: Dichtring

## Patentansprüche

1. Vorrichtung zur Sekundärfederung eines Wagenkastens (1) bei einem Schienenfahrzeug, mit einem zwischen dem Wagenkasten (1) und einem Drehgestell (2) angeordneten Federelement (3), welches während der Fahrt des Schienenfahrzeuges zumindest ein angehobenes Fahrtniveau für den Wagenkasten (1) sicherstellt, wobei das Federelement (3) im Stillstand des Schienenfahrzeuges mittels eines Zugzylinders (4) zusammendrückbar ist, um ein unterhalb des angehobenen Fahrtniveaus liegendes abgesenktes Bahnsteigniveaus für den Wagenkasten (1) einzustellen, wobei der Zugzylinder (4) mit Mitteln zum mechanischen Entkoppeln der Abwärtsbewegung des Wagenkastens (1) von einer Druckverringerung im Druckraum (10) des Zugzylinders (4) ausgestattet ist,
**dadurch gekennzeichnet, dass** die Mittel zum mechanischen Entkoppeln einen Kolben (5) mit zentralem Durchbruch (11) für eine Bundkolbenstange (6) aufweisen, so dass bei der Abwärtsbewegung der Bundkolbenstange (6) der Kolben (5) in der aktuellen Position bleibt.

2. Vorrichtung nach Anspruch 1,
**dadurch gekennzeichnet, dass** der Durchbruch (11) des Kolbens (5) mit mindestens einem Dichtring (12) versehen ist, der dichtend an der Bundkolbenstange (6) zur Anlage kommt.

3. Vorrichtung zur Sekundärfederung eines Wagenkastens (1) bei einem Schienenfahrzeug, mit einem zwischen dem Wagenkasten (1) und einem Drehgestell (2) angeordneten Federelement (3), welches während der Fahrt des Schienenfahrzeuges zumindest ein angehobenes Fahrtniveau für den Wagenkasten (1) sicherstellt, wobei das Federelement (3) im Stillstand des Schienenfahrzeuges mittels eines Zugzylinders (4) zusammendrückbar ist, um ein unterhalb des angehobenen Fahrtniveaus liegendes abgesenktes Bahnsteigniveaus für den Wagenkasten (1) einzustellen, wobei der Zugzylinder (4) mit Mitteln zum mechanischen Entkoppeln der Abwärtsbewegung des Wagenkastens (1) von einer Druckverringerung im Druckraum (10) des Zugzylinders (4) ausgestattet ist,
**dadurch gekennzeichnet, dass** die Mittel zum mechanischen Entkoppeln eine den Kolben (6) mit Kolbenstange (12) bildende und das Zylindergehäuse (9) abgedichtet durchdringende topfförmige Kolbeneinheit (13) aufweisen, die bodenseitig einen Durchbruch (14) für eine Bundkolbenstange (6') besitzt, so dass bei der Abwärtsbewegung der Bundkolbenstange (6') die Kolbeneinheit (13) in der aktuellen Position bleibt.

4. Vorrichtung zur Sekundärfederung eines Wagenkastens (1) bei einem Schienenfahrzeug, mit einem zwischen dem Wagenkasten (1) und einem Drehgestell (2) angeordneten Federelement (3), welches während der Fahrt des Schienenfahrzeuges zumindest ein angehobenes Fahrtniveau für den Wagenkasten (1) sicherstellt, wobei das Federelement (3) im Stillstand des Schienenfahrzeuges mittels eines Zugzylinders (4) zusammendrückbar ist, um ein unterhalb des angehobenen Fahrtniveaus liegendes abgesenktes Bahnsteigniveaus für den Wagenkasten (1) einzustellen, wobei der Zugzylinder (4) mit Mitteln zum mechanischen Entkoppeln der Abwärtsbewegung des Wagenkastens (1) von einer Druckverringerung im Druckraum (10) des Zugzylinders (4) ausgestattet ist,
**dadurch gekennzeichnet, dass** die Mittel zum mechanischen Entkoppeln eine gegenüberliegend zu einer ersten Kolbenstange (6'") mit Kolben (5) angeordete Bundkolbenstange (19) umfasst, die durch einen zylinderbodenseitigen Durchbruch (20) in einen entlüfteten Innenraum (21) des Zugzylinders (4) geführt ist.

5. Vorrichtung nach Anspruch 4,
**dadurch gekennzeichnet, dass** der durch den Durchbruch (20) geführte Kolbenstangendurchmesser der Bundkolbenstange (19) mehr als halb so groß ist wie der Bunddurchmesser der Bundkolbenstange (19).

6. Vorrichtung zur Sekundärfederung eines Wagenkastens (1) bei einem Schienenfahrzeug, mit einem zwischen dem Wagenkasten (1) und einem Drehgestell (2) angeordneten Federelement (3), welches während der Fahrt des Schienenfahrzeuges zumindest ein
angehobenes Fahrtniveau für den Wagenkasten (1) sicherstellt, wobei das Federelement (3) im Stillstand des Schienenfahrzeuges mittels eines Zugzylinders (4) zusammendrückbar ist, um ein unterhalb des angehobenen Fahrtniveaus liegendes abgesenktes Bahnsteigniveaus für den Wagenkasten (1) einzustellen, wobei der Zugzylinder (4) mit Mitteln zum mechanischen Entkoppeln der Abwärtsbewegung des Wagenkastens (1) von einer Druckverringerung im Druckraum (10) des Zugzylinders (4) ausgestattet ist,
**dadurch gekennzeichnet, dass** die Mittel zum mechanischen Entkoppeln einen Zylinderkopfkolben (22) umfassen, der den Druckraum (10) stirnseitig begrenzt und axial bis zu einem Zylinderbund (23) abgedichtet relativ zum Zylindergehäuse (9) bewegbar ist und mit einem zentralen Durchbruch (24) für die Durchführung der Kolbenstange (6"") mit Kolben (5) versehen ist.

7. Vorrichtung nach Anspruch 6,
**dadurch gekennzeichnet, dass** der Zylinderkopfkolben (22) mit mindestens einem außenradialen Dichtring (25a) versehen ist, und dass der Durchbruch (24) des Zylinderkopfkolbens (22) mit mindestens einem Dichtring (25b) ausgestattet ist.

## Claims

1. Device for the secondary suspension of a car body (1) in a rail vehicle, having a spring element (3) which is arranged between the car body (1) and a bogie (2) and which ensures at least a raised travel level for the car body (1) while the rail vehicle is traveling, wherein the spring element (3) can be compressed by means of a traction cylinder (4) when the rail vehicle is stationary, in order to set a lowered railway platform level, below the raised travel level, for the car body (1), wherein the traction cylinder (4) is equipped with means for mechanically decoupling the downward movement of the car body (1) from a reduction in pressure in the pressure chamber (10) of the traction cylinder (4), **characterized in that** the means for mechanical decoupling have a piston (5) with a central breakthrough (11) for a collar piston rod (6) so that the piston (5) remains in the current position during the downward movement of the collar piston rod (6).

2. Device according to Claim 1, **characterized in that** the breakthrough (11) in the piston (5) is provided with at least one sealing ring (12) which comes to rest against the collar piston rod (6) in a seal-forming fashion.

3. Device for the secondary suspension of a car body (1) in a rail vehicle, having a spring element (3) which is arranged between the car body (1) and a bogie (2) and which ensures at least a raised travel level for the car body (1) while the rail vehicle is traveling, wherein the spring element (3) can be compressed by means of a traction cylinder (4) when the rail vehicle is stationary, in order to set a lowered railway platform level, below the raised travel level, for the car body (1), wherein the traction cylinder (4) is equipped with means for mechanically decoupling the downward movement of the car body (1) from a reduction in pressure in the pressure chamber (10) of the traction cylinder (4), **characterized in that** the means for mechanical decoupling have a pot-shaped piston unit (13) which forms the piston (6) with the piston rod (12) and which penetrates the cylinder casing (9) in a sealed fashion, said piston unit (13) having at the bottom a breakthrough (14) for a collar piston rod (6') so that the piston unit (13) remains in the current position during the downward movement of the collar piston rod (6').

4. Device for the secondary suspension of a car body (1) in a rail vehicle, having a spring element (3) which is arranged between the car body (1) and a bogie (2) and which ensures at least a raised travel level for the car body (1) while the rail vehicle is traveling, wherein the spring element (3) can be compressed by means of a traction cylinder (4) when the rail vehicle is stationary, in order to set a lowered railway platform level, below the raised travel level, for the car body (1), wherein the traction cylinder (4) is equipped with means for mechanically decoupling the downward movement of the car body (1) from a reduction in pressure in the pressure chamber (10) of the traction cylinder (4), **characterized in that** the means for mechanical decoupling comprise a collar piston rod (19) which is arranged lying opposite a first piston rod (6"') with the piston (5) and which is led into a ventilated interior space (21) in the traction cylinder (4) through a cylinder-base-end breakthrough (20).

5. Device according to Claim 4, **characterized in that** the piston rod diameter, led through the breakthrough (20), of the collar piston rod (19) is more than half as large as the collar diameter of the collar piston rod (19).

6. Device for the secondary suspension of a car body (1) in a rail vehicle, having a spring element (3) which is arranged between the car body (1) and a bogie (2) and which ensures at least a raised travel level for the car body (1) while the rail vehicle is traveling, wherein the spring element (3) can be compressed by means of a traction cylinder (4) when the rail vehicle is stationary, in order to set a lowered railway platform level, below the raised travel level, for the car body (1), wherein the traction cylinder (4) is equipped with means for mechanically decoupling the downward movement of the car body (1) from a reduction in pressure in the pressure chamber (10) of the traction cylinder (4), **characterized in that** the means for mechanical decoupling comprise a cylinder head piston (22) which bounds the pressure chamber (10) at the end and can be moved axially as far as a cylinder collar (23), while being sealed in relation to the cylinder casing (9), and is provided with a central breakthrough (24) for leading through the piston rod (6"") with the piston (5).

7. Device according to Claim 6, **characterized in that** the cylinder head piston (22) is provided with at least one externally radial sealing ring (25a), and **in that** the breakthrough (24) of the cylinder head piston (22) is equipped with at least one sealing ring (25b).

## Revendications

1. Dispositif de suspension secondaire d'une caisse (1) de véhicule ferroviaire, comprenant un élément (3) à ressort, qui est monté entre la caisse (1) et un boggie (2) et qui assure, pendant la marche du véhicule ferroviaire, au moins un niveau de marche élevé de la caisse (1), l'élément (3) à ressort pouvant, lorsque le véhicule ferroviaire est à l'arrêt, être comprimé au moyen d'un vérin (4) de traction pour établir pour la caisse (1) un niveau de quai abaissé en dessous du niveau de marche élevé, dans lequel le vérin (4) de traction est équipé de moyens pour découpler mécaniquement le mouvement de descente de la caisse (1) d'une diminution de pression dans la chambre (10) de pression du vérin (4) de traction,
**caractérisé en ce que** les moyens pour découpler mécaniquement comprennent un piston (5) ayant une traversée (11) centrale pour une tige (6) de piston à collet de manière à ce que le piston (5) reste dans la position présente lors du mouvement de descente de la tige (6) de piston à collet.

2. Dispositif suivant la revendication 1, **caractérisé en ce que** la traversée (11) du piston (5) est pourvue d'au moins une bague (12) d'étanchéité, qui s'applique avec étanchéité à la tige (6) de piston à collet.

3. Dispositif de suspension secondaire d'une caisse (1) de véhicule ferroviaire, comprenant un élément (3) à ressort, qui est monté entre la caisse (1) et un boggie (2) et qui assure, pendant la marche du véhicule ferroviaire, au moins un niveau de marche élevé de la caisse (1), l'élément (3) à ressort pouvant, lorsque le véhicule ferroviaire est à l'arrêt, être comprimé au moyen d'un vérin (4) de traction pour établir pour la caisse (1) un niveau de quai abaissé en dessous du niveau de marche élevé, dans lequel le vérin (4) de traction est équipé de moyens pour découpler mécaniquement le mouvement de descente de la caisse (1) d'une diminution de pression dans la chambre (10) de pression du vérin (4) de traction,
**caractérisé en ce que** les moyens pour découpler mécaniquement comprennent un groupe (13) piston en forme de pot, formant le piston (6) avec la tige (12) de piston et traversant de manière étanche le corps (9) du vérin, groupe qui possède du côté du fond une traversée (14) pour une tige (6') de piston à collet de manière à ce que le groupe (3) piston reste dans la position présente lors du mouvement de descente de la tige (6') de piston à collet.

4. Dispositif de suspension secondaire d'une caisse (1) de véhicule ferroviaire, comprenant un élément (3) à ressort, qui est monté entre la caisse (1) et un boggie (2) et qui assure, pendant la marche du véhicule ferroviaire, au moins un niveau de marche élevé de la caisse (1), l'élément (3) à ressort pouvant, lorsque le véhicule ferroviaire est à l'arrêt, être comprimé au moyen d'un vérin (4) de traction pour établir pour la caisse (1) un niveau de quai abaissé en dessous du niveau de marche élevé, dans lequel le vérin (4) de traction est équipé de moyens pour découpler mécaniquement le mouvement de descente de la caisse (1) d'une diminution de pression dans la chambre (10) de pression du vérin (4) de traction,
**caractérisé en ce que** les moyens pour découpler mécaniquement comprennent une tige (19) de piston à collet, disposée en opposition à une première tige (6"') de piston à piston (5) et guidée dans une traversée (20) du côté du fond du vérin dans un espace (21) intérieur mis à l'atmosphère du vérin (4) de traction.

5. Procédé suivant la revendication 4,
**caractérisé en ce que** le diamètre guidé dans la traversée (20) de la tige (19) de piston à collet est plus grand que la moitié du diamètre du collet de la tige (19) de piston à collet.

6. Dispositif de suspension secondaire d'une caisse (1) de véhicule ferroviaire, comprenant un élément (3) à ressort, qui est monté entre la caisse (1) et un boggie (2) et qui assure, pendant la marche du véhicule ferroviaire, au moins un niveau de marche élevé de la caisse (1), l'élément (3) à ressort pouvant, lorsque le véhicule ferroviaire est à l'arrêt, être comprimé au moyen d'un vérin (4) de traction pour établir pour la caisse (1) un niveau de quai abaissé en dessous du niveau de marche élevé, dans lequel le vérin (4) de traction est équipé de moyens pour découpler mécaniquement le mouvement de descente de la caisse (1) d'une diminution de pression dans la chambre (10) de pression du vérin (4) de traction,
**caractérisé en ce que** les moyens pour découpler mécaniquement comprennent un piston (22) de tête de vérin, qui délimite du côté frontal la chambre (10) de pression et qui peut se déplacer par rapport au corps (9) du vérin en étant rendu étanche axialement jusqu'à un collet (23) du vérin et qui est pourvu d'une traversée (24) centrale pour le passage de la tige (6"" ) du piston avec le piston (5).

7. Procédé suivant la revendication 6,
**caractérisé en ce que** le piston (22) de tête du vérin est pourvu d'au moins une bague (25a) d'étanchéité radiale vers l'extérieur et **en ce que** la traversée (24) du piston (22) de tête du vérin est équipée d'au moins une bague (25b) d'étanchéité.
